# EUROPEAN PATENT SPECIFICATION

(11) **EP 3 034 859 B1**
(45) Date of publication and mention of the grant of the patent: **20.02.2019**
(21) Application number: 15200470.1
(22) Date of filing: 16.12.2015
(51) Int. Cl.: F03B 17/06, F03D 3/02, F03D 7/06

(54) **A WIND TURBINE PLANT OR CLUSTER WITH VERTICAL AXIS WIND TURBINES**
WINDTURBINENANLAGE ODER -GRUPPE MIT WINDTURBINEN MIT VERTIKALER ACHSE
INSTALLATION ÉOLIENNE OU GROUPE D'ÉOLIENNES À AXE VERTICAL

(30) Priority: 16.12.2014 EP 14198227
(43) Date of publication of application: 22.06.2016
(73) Proprietor: Smart Wind Integrated Renewables Letzebuerg, Société en Commandite Simple, 1445 Strassen (LU)
(72) Inventor: MULLER, Myriam, 5371 Schuttrange (LU); HESS, Joseph, 5371 Schuttrange (LU); CHORUS, Stefan, 8399 Windhof (LU)
(74) Representative: Pronovem

(56) References cited:
- WO-A2-2009/084870
- GB-A- 2 508 502
- US-A1- 2004 141 845
- US-A1- 2009 202 346
- US-A1- 2012 161 448

## Description

### Technical Field:

The present invention generally relates to a wind turbine plant and to a cluster of wind turbines. It relates more particularly to a wind turbine plant comprising at least two vertical axis wind turbines and to a cluster (or wind turbine farm) comprising a multitude of vertical axis wind turbines.

### Background Art:

Vertical axis wind turbines (generally referred to as VAWTs) are well known in the art. Such a VATW normally includes: a substantially vertical turbine shaft; generally at least two turbine blades, which are arranged axially along turbine shaft and mechanically connected to the latter, so as to be able to transform the kinetic energy of the wind in a mechanical torque that is transmitted to the turbine shaft; and an electric generator, transforming the mechanical energy of the rotating turbine shaft in electrical energy. The turbine blades are most often wing-shaped turbine blades (also called airfoils or aerofoils or profiled or lift-type turbine blades). The electric generator is normally located at the base of the turbine.

It is well established knowledge that the VAWT is omnidirectional, i.e. that there is no need to point the VAWT into the wind or, in other words, that the efficiency of the VAWT is not affected by the direction of the wind.

It is also well established knowledge that in wind turbine farms, VAWTs can be arranged very close to one another. This allows to achieve in wind turbine farms a much higher electric energy output per ground surface area (expressed e.g. in MW/km²) with VAWTs than with HAWTs (i.e. horizontal axis wind turbines).

US 6,784,566 B2 discloses a pair of vertical axis wind turbines arranged in close proximity to each other so that their vortices interact with each other to provide enhanced aerodynamic efficiency. The wind turbines are spaced as closely as possible while providing for machine and personnel safety. Adjacent wind turbines rotate in opposite directions to enhance the coupled vortex effect. The row of turbines is oriented perpendicular to the prevailing wind direction. The document teaches that the proposed arrangement of VAWTs is particularly well suited to geographical areas with a strong prevailing wind direction and little directional variability, but that the coupled vortex arrangement may not work well at sites without a dominant prevailing wind direction.

WO 2010/117394 A1 discloses a two column arrangement of wind turbines, preferably VAWTs, forming a two-dimensional array of turbines, which are staggered and aligned in the downwind direction. The first and second column of turbines have a downstream distance and cross-wind spacing (shifting) from each other. The downstream distance and the shifting can be different from site to site, depending on the site wind conditions and topography. The wind turbines per column are rotating clockwise or counter-clockwise depending on their location. Spacing is to be fixed in relationship to the radius of a VAWT. In some, non-detailed embodiments, wind turbines are said to re-orient incoming wind and to direct it optimally towards each successive row of turbines. The proposed arrangements are said to perform the same in a north-south wind as in a south-north wind, once turbine rotational directions have been properly assigned. However, it is more than doubtful that the proposed arrangement performs equally well in crosswinds.

US 7988413 B2 and US 8,376,688 B2 disclose a dense cluster of a VAWT based array structure with a plurality of VAWT generators arranged in rows that are perpendicular to a predominant wind direction. In the rows, the VAWTs are distanced from each other by approximately one rotor diameter. This distancing is said to enable top efficiency of each VAWT while avoiding a wake downwind from the neighbouring VAWTs. In the array, the VAWT rows are also distanced by approximately one rotor diameter, but the VAWTs are positioned in a staggered centreline formation, to capture wind coming from the preceding row and passing in between the VAWTs. However, energy conversion efficiency of the proposed dense cluster is very dependent on the wind direction and is most probably completely unsatisfactory in case of cross-wind.

GB 2508502 describes a system for capturing energy from the wind. The system comprises one or more elongate structural elements, multiple wind turbine modules supported by the elongate structural members. The wind turbine modules, which are single-blade turbines, are arranged along the elongate structural elements such that adjacent wind turbine modules are spaced from one another by different distances. Preferably the elongate structural elements are arranged at different angles to the direction of the prevailing wind, where the spacing between adjacent wind turbine modules is smaller for sections of the elongate element closer to being perpendicular to the prevailing wind and vice versa. Such a system requires a lot of space and its efficiency is questionable.

US 2012/01614448 describes a multiple wind power generation system including multiple rotors each with a substantially vertical shaft and multiple blades extending in a radial manner from each of the rotor shafts with a generator operationally coupled to the rotor shafts. The multiple rotors and generators are mounted within a frame that can be rotated about a vertical axis. An aerodynamically efficient wind flow optimizing or wind splitter device is affixed to the frame and covering almost half of each of the rotors. This wind splitter avoids that two neighbouring rotors mutually influence each other. An electrical motor mechanism is operatively coupled to the frame to rotate the frame about a vertical axis. One or more sensors are mounted around the frame structure to determine wind speed and direction. The electrical motor mechanism is coupled with a processor and controls the movement of the frame structure to orient the wind turbine generator system in the direction of the incident wind flow which will provide the maximum wind force for the turning moment of the rotor shafts of each turbine. It will be appreciated that this multiple wind power generation system shows a very high flow resistance, i.e. it has to be designed to support very high wind forces when exposed to high wind speeds.

US 2004/0141845 describes a vertical axis wind turbine that has two counter-rotating rotors mounted on first and second spaced apart vertical axes. Each rotor has a plurality of drag-type rotor blades extending generally inwardly from an outer circumference, the vertical axes being mounted on a support structure which is in turn rotatable on a third vertical axis on a platform. The third axis is spaced from a point midway between the first and second axes in a direction at 90 degrees to and forward from a line between the first and second axes. The vertical axis wind turbine further has a guide vane mounted on the support structure, having a vertex forward of the third vertical axis in the direction at 90 degrees from a line between the first and second axes. The guide vane has left and right symmetrical vane portions extending towards the rotors so as to direct airflow from wind primarily towards portions of the rotors outboard of the first and second axes. The guide vane also tends to keep the vertical axis wind turbine oriented with the guide vane's axis of symmetry pointing forwardly into the wind. This vertical axis wind turbine too shows a very high flow resistance, i.e. it has to be designed to support very high wind forces when exposed to high wind speeds. Its energy conversion efficiency is moreover questionable. This is in particular true if several of such vertical axis wind turbines are to be installed in a dense arrangement.

US 2012/0020788 describes a wind energy system comprising a wind accelerator having a support assembly and an outer structure surrounding the support assembly. The wind accelerator has a front region and a rear region. The rear region is substantially wider than the front region, and the outer structure tapers from the rear region to the front region. One or more turbines are mounted on the support assembly at or near the rear region of the wind accelerator or at or near the widest point of the wind accelerator. The mounting structure can be rotated about a vertical axis so as to allow orienting so the one or more wind turbines face into oncoming wind. This wind energy system too shows a very high flow resistance, i.e. it has to be designed to support very high wind forces when exposed to high wind speeds. If several of such wind energy system are to be installed in a dense arrangement, it has to be expected that there energy conversion efficiency will strongly decrease.

US 2009/022346 A1 describes an arrangement of drag-type VAWTs, which are fixedly supported by a tower. The drag-type VAWTs disclosed in this document feature sails of adjustable geometry and adjustable orientation relative to the wind.

An object of the present invention is to propose a wind turbine plant that allows to achieve a dense arrangement of VAWTs warranting an efficient energy conversion and that is, amongst others, less sensible to high wind speeds.

### Summary of invention:

This problem is solved by a wind turbine plant as defined in the claims using the description and drawings to interpret the claims.

According to a first aspect of the present invention the proposed wind turbine plant comprises a common turbine support platform supporting at least two vertical axis wind turbines (VAWTs) horizontally spaced apart from one another, and a swivel device supporting the common turbine support platform, so that the latter is swivellable about a substantially vertical swivel axis. (Remark: the wording "substantially vertical swivel axis" here means that-depending on the applications-the swivel axis may deviate from the vertical by an angle up to 20° and even up to 35°. Similarly, the rotation axes of the VAWTs may deviate from the vertical by an angle up to 20° and even up to 35°.) On the common turbine support platform, the VAWTs can be arranged in a more or less dense or compact arrangement, which is optimized so as to achieve good energy conversion efficiency when the wind hits the arrangement of VAWTs from a specific design direction. By swivelling the common turbine support platform about its substantially vertical swivel axis, it can then be warranted that the wind always hits the arrangement of VAWTs on the common turbine support platform from said specific design direction for which the arrangement of VAWTs has been optimized.

According to a complementary aspect of the present invention, each of the vertical axis wind turbines includes a substantially vertical shaft and at least three wing-shaped turbine blades of the lift-type circumferentially distributed around the vertical shaft, wherein the wing-shaped turbine blades of two neighbouring vertical axis wind turbines are exposed to the wind in the space between the vertical shafts of the two vertical axis wind turbines. In other words, there is no wind flow guiding device arranged between two neighbouring vertical axis wind turbines. Furthermore, the rotation diameters of the two neighbouring vertical axis wind turbines (12) are separated by a horizontal distance s that is between 0.2*dmax and 1.5*dmax (preferably between 0.3*dmax and 0.7*dmax, and more preferably between 0.4*dmax and 0.6*dmax), where dmax is the largest rotation diameter of the two neighbouring vertical axis wind turbines (12) and the two vertical axis wind turbines (12) are designed for having opposite directions of rotation. (The turbine rotation diameter d being defined as the minimum diameter of a right circular cylinder centred on the vertical axis of rotation of the VATW and fully enveloping all the rotating turbine blades.) It will be appreciated that in combination with the proposed swivelling feature the afore-described features allow to optimize the energy conversion efficiency of closely spaced VAWTs for all wind directions, without using any wind guiding device arranged between two neighbouring vertical axis wind turbines.

In summary, the proposed wind turbine plant allows to achieve very compact VAWT clusters, having a good energy conversion efficiency that is-despite the very compact arrangement of the VAWTs basically not dependent on the wind direction and shows moreover a relatively low flow resistance when exposed to high wind speeds.

The axes of rotation of the vertical axis wind turbines are preferably horizontally spaced from the substantially vertical swivel axis, but the proposed wind turbine plant may include a further vertical axis wind turbine having its axis of rotation substantially aligned with the substantially vertical swivel axis. This central VAWT may be but need not be supported by the common turbine support platform.

Preferred embodiments of the proposed wind turbine plant include at least three, preferably at least four and more preferably at least five vertical axis wind turbines, which are preferably aligned on the common turbine support platform, so as to form a substantially linear arrangement of vertical axis wind turbines horizontally spaced from one another. Preferably the number of vertical axis wind turbines on the common turbine support platform is not higher than ten.

As it is easily possible to arrange the vertical axis wind turbines on the common turbine support platform so that the common centre of gravity of the common turbine support platform and any equipment supported by the latter, inclusive the vertical axis wind turbines, is located on or at least close to the substantially vertical swivel axis of the common turbine support platform, the swivel device can be basically free of any major moment of force due to the weight of the common turbine support platform and of the VAWTs supported by the latter.

The vertical axis wind turbines used in the proposed wind turbine plant preferably include n wing-shaped turbine blades (i.e. lift-type turbine blades, also called airfoils or aerofoils or profiled turbine blades), wherein n is preferably equal to 3, 4 or 5.

For further optimization of energy conversion in the proposed wind turbine plant, two neighbouring vertical axis wind turbines advantageously distinguish from each other by having a different turbine solidity. (The "turbine solidity" is here defined as the ratio of the area occupied by the turbines blades and the area that the turbine blades sweep through.) The difference between both turbine solidities is greater than 5%, preferably greater than 10% and more preferably greater than 20% of the smallest turbine solidity. In such a configuration, the VAWT with highest turbine solidity will help the VAWT with the lowest turbine solidity to start at low wind speeds. Consequently, in comparison to isolated VAWTs, the proposed wind turbine plant will start earlier and be more efficient at low wind speeds. Same applies if the two neighbouring vertical axis wind turbines distinguish from each other by at least one of the following features: their number of turbine blades; their diameter; the shape of at least one of their turbine blades; the section profile of at least one of their turbine blades; the chord length of at least one of their turbine blades; the pitch angle of at least one of their turbine blades; the angular spacing of their turbine blades; and, in operation, by the points in time at which their turbine blades cross the vertical plane containing the centres of the two neighbouring vertical axis wind turbines.

The swivel device is normally supported by a vertical support structure at a certain height above ground or above water level. However, this vertical support structure might be part of a building or a non-building.

A typical swivel device for the proposed wind turbine plant includes at least one pivot bearing and a swivel drive capable of swivelling the common turbine support platform about the substantially vertical swivel axis defined by the at least one pivot bearing.

For some applications it may be of interest if the proposed wind turbine plant additionally comprises at least one solar panel rotatably supported by the common turbine support platform. A control system can then be used to orient the rotatably supported solar panel substantially perpendicular to the direction of the sun, this independently of the orientation of the common turbine support platform, i.e. of the wind direction. However, if the wind speed exceeds a certain limit, this control system orients the rotatably supported solar panel parallel to the wind speed, independently of the direction of the sun, to avoid that the solar panel is damaged.

To further increase the efficiency of the proposed wind turbine plant, a control system advantageously controls the instantaneous angular position of two neighbouring vertical axis wind turbines, so that the turbine blades of the two vertical axis wind turbines cross the vertical plane containing the centres of these two neighbouring vertical axis wind turbines separated by a non-zero time interval. This control system preferably controls the instantaneous angular position of the two neighbouring vertical axis wind turbines by instantaneously increasing, respectively decreasing, power demand from at least one of the two vertical axis turbines, thereby slowing down, respectively accelerating, the respective vertical axis turbine. In a preferred embodiment, the control system monitors total power output of both vertical axis turbines and controls their instantaneous angular positions so as to maximize said total power output.

A preferred embodiment of the proposed wind turbine plant further comprises a control system, which at wind speeds below a certain limit wind speed (which may be pre-set or be adjusted in real-time on the basis of measured parameters of the wind turbine plant), controls the swivel device so that the vertical longitudinal midplane of the vertical axis wind turbines aligned on the common turbine support platform remains substantially perpendicular to the wind direction. (The wording "the vertical longitudinal midplane of the vertical axis wind turbines aligned on the common turbine support platform" generally designates the vertical plane passing lengthwise through the centre of a rectangular prism enveloping the VAWTs aligned on the common turbine support platform.) Proceeding this way, the control system optimizes the efficiency of energy conversion at wind speeds below said limit wind speed. At wind speeds above said limit wind speed, the control system advantageously controls the swivel device so that the angle between the wind direction and the vertical longitudinal midplane of the vertical axis wind turbines aligned on the common turbine support platform progressively decreases from 90° to 0°, when the wind speed increases above said limit wind speed. Proceeding this way, the control system progressively reduces the efficiency of the VAWTs with increasing wind speeds above said limit wind speed, thereby reducing the part of the kinetic wind energy to be absorbed by the VAWTs for a given wind speed. Hereby it becomes possible to delay high wind speed emergency braking of the VAWTs. In conclusion, the preferred embodiment of the control system not only warrants best wind energy conversion up to a limit wind speed, but also continued energy conversion for wind speeds above said limit wind speed.

The invention further proposes a wind turbine farm comprising at least two wind turbine plants as proposed hereinbefore, wherein the horizontal distance (A) between the vertical swivel axes of the two wind turbine plants is in the range of (D1+D2)/2 + 0.5d and (D1+D2)/2 + 5d, and preferably in the range of (D1+D2)/2 + 0.5d and (D1+D2)/2 + 3d, wherein D1, D2 are the rotation diameters of the two wind turbine plants (normally D1 = D2), and d is the biggest rotation diameter of the outermost vertical axis wind turbines of the wind turbine plants. Such an arrangement is then advantageously repeated according two orthogonal directions, so as to obtain a two-dimensional array wind turbine plants. It will be appreciated that the proposed terrestrial wind turbine farm is in comparison to prior art wind turbine farms very compact, and has a good energy conversion efficiency, which is despite the very compact arrangement of the VAWTs basically not dependent on the wind direction. In particular, the wind turbine plants in the wind turbine farm do not negatively influence each other.

An advantageous embodiment of the wind turbine plant to be used in water (i.e. in offshore applications or in rivers or lakes) comprises a floatable pontoon, whereon the swivel device is supported via a vertical support structure. In some applications it includes at least one water turbine arranged under the floatable pontoon. In a preferred embodiment, this water turbine has a substantially horizontal axis of rotation, and wing-shaped turbine blades extending axially along the substantially horizontal axis of rotation. It preferably comprises at least three rotor sections aligned along a common shaft of rotation, wherein the central rotor section has a smaller diameter of rotation and/or lesser turbine blades than its two neighbouring rotor sections. It will be understood that the water turbine described herein can also be used independently of the wind turbine plant disclosed herein.

### Brief description of drawings:

The afore-described and other features, aspects and advantages of the invention will be better understood with regard to the following description of several embodiments of the invention and upon reference to the attached drawings, wherein:
- FIG. 1:: is a schematic elevation view showing an embodiment of a wind turbine plant in accordance with the invention, mounted onto a support structure for terrestrial applications;
- FIG. 2:: is a schematic plan view of the top part of the wind turbine plant of FIG. 1, showing a swivellable common support platform with five vertical axis wind turbines;
- FIG. 3:: is a schematic elevation view showing an embodiment of a wind turbine plant in accordance with the invention, mounted onto a floatable support structure for use in water;
- FIG. 4:: is a 3D view of a vertical axis wind turbine with three turbine blades;
- FIG. 5:: is a 3D view of a vertical axis wind turbine with four turbine blades;
- FIG. 6:: is an enlarged 3D view of a turbine blade support structure and energy conversion module for the vertical axis wind turbine of FIG. 4;
- FIG. 7:: is an enlarged 3D view of a turbine blade support structure and energy conversion module for the vertical axis wind turbine of FIG. 4;
- FIG. 8:: is a schematic elevation view showing a further embodiment of the top part of a wind turbine plant in accordance with the invention;
- FIG. 9:: is a 3D view of a vertical axis wind turbine with four turbine blades designed for a counter-clockwise rotation;
- FIG. 10:: is a top view of the vertical axis wind turbine of FIG. 9;
- FIG. 11:: is a 3D view of a vertical axis wind turbine with four turbine blades designed for a clockwise rotation;
- FIG. 12:: is a top view of the vertical axis wind turbine of FIG. 11;
- FIG. 13:: is a top view of a vertical axis wind turbine with three turbine blades illustrating turbine blade pitch modification for one turbine blade;
- FIG. 14:: is a schematic elevation view showing a further embodiment of a wind turbine plant in accordance with the invention;
- FIG. 15:: is a top view showing four wind turbine plants in accordance with the invention arranged to form a cluster with twenty VAWTs, wherein the orientation of the common support platforms of the VAWTs is adapted for a first wind direction;
- FIG. 16:: is a top view as in FIG. 15, wherein the orientation of the common support platforms of the VAWTs is adapted for a second wind direction, which defines an angle of 45° with the first wind direction of FIG. 15;
- FIG. 17:: is a top view as in FIG. 15, wherein the orientation of the common support platforms of the VAWTs is adapted for a second wind direction, which defines an angle of 90° with the first wind direction of FIG. 15;
- FIG. 18:: is a diagram showing the rotor power of a VAWT in function of the wind speed;
- FIG. 19:: is a diagram showing the rotor power of a VAWT in function of its rotation speed;
- FIG. 20:: is a schematic view showing an embodiment of a water turbine;
- FIG. 21:: is a schematic view showing an embodiment of a floatable structure with two superposed water turbines as shown in FIG. 15; and
- FIG. 22:: is a top view showing two neighbouring VAWTs with their control system.

### Detailed description of several embodiments of the invention

It will be understood that the following description and the drawings to which it refers describe by way of example several embodiments of the proposed invention for illustration purposes. They shall not limit the scope, nature or spirit of the invention.

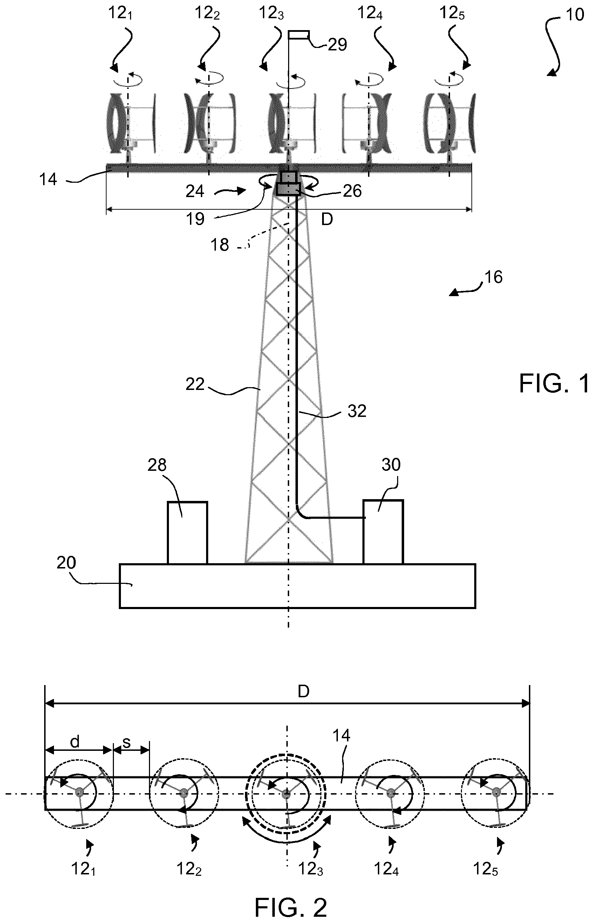

FIG. 1 schematically shows a first embodiment of a wind turbine plant 10 in accordance with the invention. This wind turbine plant 10 comprises five vertical axis wind turbines (VAWTs) 12₁, 12₂, 12₃, 12₄, 12₅ mounted on a common turbine support platform 14. Reference number 16 identifies a support structure on which the common turbine support platform 14 is swivellably supported so as to be swivellable about a substantially vertical swivel axis 18. This swivelling movement is schematically indicated by a curved arrow 19.

In FIG. 1, which represents a terrestrial wind turbine plant 10, the support structure 16 comprises a base 20 (e.g. a concrete base, a metal construction, a part of a building or of non-building structure) and a vertical structure 22 (e.g. a tower, mast or pylon). The vertical structure 22 has a lower end, which is supported on the base 20, and an upper end, which supports a swivel device 24. This swivel device 24 supports the common turbine support platform 14 on the upper end of the tower, so that this turbine support platform 14 with the VAWTs supported thereon is swivellable about the substantially vertical swivel axis 18. The swivel device 24, which has to be designed to bear, amongst others, the weight of the common turbine support platform 14 with the VATWs and the horizontal components of wind forces acting onto the latter, typically includes at least one vertical pivot bearing and a swivel drive 26. A suitable swivel drive 26 comprises, for example, an electric motor equipped with a gear box and cooperating with a gear ring or gear ring sector on the common turbine support platform 14. As the swivelling range of the common turbine support platform 14 about the substantially vertical swivel axis 18 can normally be limited to an angular sector of 180°, the swivel drive 26 can be rather simple and can even comprise a drive mechanism with a linear motor instead of a rotary motor. The height of the vertical structure 22 will normally be determined in function of wind speed measurements in different heights and of local requirements and/or constraints. In some cases, e.g. if the terrestrial wind turbine plant 10 is mounted on top of an elevated non-building structure, the vertical structure 22 can be omitted, i.e. the swivel device 24 for the common turbine support platform 16 is directly supported on the base 20.

In FIG. 1, reference number 28 identifies a control unit associated with the wind turbine plant 10. This control unit 28 is, amongst others, capable of controlling the swivel drive 26, so as to adjust the angular position of the common turbine support platform 14 in function of the wind direction, captured by an electronic wind vane 29, which is normally associated with an anemometer for measuring wind speed. In Fig. 1, this control unit is shown on the base 20, but it could also be arranged on the vertical structure 22 or on the common turbine support platform 16 or be distributed on different locations. As described further down, the control unit 28 also coordinates the operation of the VAWTs 12₁ - 12₅. Therefore, control cables 29, which are e.g. guided through a central opening in the swivel device 24 and through the vertical structure 22, interconnect the VAWTs 12₁ - 12₅, to the control unit 28. Alternatively or additionally, wireless communication means can be used to connect the VAWTs 12₁ - 12₅ to the to the control unit 28.

Reference number 30 identifies an electrical unit including the required electrical equipment for feeding the electrical energy produced by the wind turbine plant 10 into an electric network (not shown). If the wind turbine plant 10 is operated in a stand-alone mode, the electrical unit 30 can further include batteries for storing the produced electrical energy for deferred consumption. The electrical unit 30 is usually controlled by the control unit 28. Power cables 32, guided e.g. through a central opening in the swivel device 24 and through the vertical structure 22, electrically connect the VAWTs 12₁ - 12₅, to the electrical unit 30.

FIG. 2 shows a top view of the common turbine support platform 14 supporting the five VAWTs 12₁ - 12₅ horizontally spaced from one another. The common turbine support platform 14 is a linear beam, on which the turbines 12₁ - 12₅ are aligned, so as to form a substantially linear arrangement of the VAWTs 12₁ - 12₅. The linear beam can e.g. be a structural steel element or assembly, a steel tube or an assembly of steel tubes, or a girder or trussed metal structure, but it is of course not excluded to make the common turbine support platform 14 of other materials than steel, provided that the required mechanical strength is achieved. Furthermore, instead of being a linear beam, the common turbine support platform 14 could have in a top view as shown in FIG. 2, e.g. a curved-shape, a zigzag-shape, an S-shape etc., which would allow to have a staggered arrangement the VAWTs. The common turbine support platform 14 could also be designed as a vertical frame, supporting each of the VAWTs 12₁ - 12₅ at is bottom and at is top end. Furthermore, instead of pointing vertically upwards from the common turbine support platform 14, as shown in the drawings, the VAWTs could also point vertically downwards, or there can be VAWTs pointing vertically upwards and VAWTs pointing vertically downwards on the same common turbine support platform 14. It is also not excluded to design the common turbine support platform 14 as a two-dimensional platform, on which the VAWTs are arranged in an array configuration. Last but not least, instead of having supported all the VAWTs 12₁ - 12₅ at the same level above ground, the common turbine support platform 14 could have a stepped design, so that the VAWTs 12₁ - 12₅ would be vertically staggered.

In the embodiment of FIG. 1 and 2, the wind turbine plant 10 includes five VAWTs. The skilled person will however readily understand that a wind turbine plant in accordance with the invention can include only two, three, four VAWTs, or that it can even include more than five VAWTs. Furthermore, if the wind turbine plant includes an impair number of VAWTs, one of these VAWTs will preferably have its vertical axis of rotation substantially aligned with the vertical swivel axis 18 (see e.g. the VAWT 12₃ in FIG. 1 and 2), while all the other VAWTs (see e.g. the VAWTs 12₁, 12₂, 12₄, 12₅ in FIG. 1 and 2) shall be horizontally spaced from the vertical swivel axis 18.The skilled person will also readily understand that within the context of the present invention, the VAWT 12₃ that is coaxial with the vertical swivel axis 18 need not be supported by the common turbine support platform 14, but could be fixed directly to the support structure 16. However, from an operational point of view, it does not harm if this central VAWT 12₃ is supported on the common turbine support platform 14 and is swivelled with the latter about its vertical swivel axis 18.

In general, the VAWTs 12ᵢ shall be arranged on the common turbine support platform 14 so that the common centre of gravity of the common turbine support platform 14 and any equipment supported by the latter, inclusive the VAWTs 12ᵢ, is located on or at least close to the vertical swivel axis 18 of the common turbine support platform 14. Thus, the swivel device 24 will be basically free of any major moment of force due to the weight of the common turbine support platform 14 and of the VAWTs supported by the latter.

It will further be noted that the proposed wind turbine plant could also include two or more vertically superposed VATWs supported on the same common turbine support platform. Alternatively or additionally, the proposed wind turbine plant could include two or more vertically superposed common turbine support platforms, each of these platforms supporting VAWTs and being swivellable about one common substantially vertical swivel axis or about substantially vertical swivel axes that are horizontally spaced from one another.

In the embodiment of FIG. 1 and 2, the five VATWs 12₁ - 12₅ all have the same number of turbine blades (in this case three turbine blades) and a same turbine rotation diameter "d". This turbine rotation diameter d is defined as being the minimum diameter of a right circular cylinder centred on the vertical axis of rotation of the VATW and fully enveloping all the rotating turbine blades. In FIG. 2, this turbine rotation diameter d is represented by a dotted line. As will be explained later on, it is however interesting to mix on the same common turbine support platform 14 VAWTs with different number of turbine blades (e.g. VAWTs with three turbine blades with VAWTs with four turbine blades) or the same number of turbine blades but different turbine rotation diameters.

Looking at Fig. 1 and 2, it will be noted that the turbine blades of two neighbouring vertical axis wind turbines 12ᵢ of the support platform 14 are fully exposed to the wind in the space between the vertical shafts of the two neighbouring wind turbines. In other words, there is no wind flow guiding device that would prevent two neighbouring vertical axis wind turbines 12ᵢ from mutually influencing each other.

In the embodiment of FIG. 2, two neighbouring turbines 12₁ and 12₂, 12₂ and 12₃, 12₃ and 12₄, 12₄ and 12₅, are spaced by a distance "s", which is preferably larger than 0.3d, more preferably larger than 0.4d, but preferably smaller than d, more preferably smaller than 0.7d, and still more preferably smaller than 0.6d. In FIG. 2, the distance s equals for example about 0.5d. As shown by the curved arrows encircling the axes of rotation of the wind turbines, two neighbouring turbines always rotate in the opposite direction or, in other words, the turbine blades of the two neighbouring turbines move in the same direction as they approach one another. For example, in the embodiment of FIG. 2, turbines 12₁, 12₃ and 12₅ rotate in the counter-clockwise direction and turbines 12₂, 12₄ rotate in the clockwise direction.

It is generally assumed that two neighbouring VAWTs with opposite directions of rotation will favourably influence each other when they are placed closely together, so that their efficiency of transforming the kinetic energy of the wind into mechanical or electrical energy will not diminish-as could be expected-but will even slightly increase. The present inventor has however discovered that this favourable effect of placing counter-rotating VAWTs closely together is lost, and the efficiency of the VAWTs even strongly decreases, if the wind direction is no longer perpendicular to the vertical longitudinal midplane of the two neighbouring VAWTs. With a wind direction substantially parallel to said plane, the efficiency of the VAWTs achieves a minimum, which is only a very small percentage of the efficiency achieved when the wind direction is perpendicular to said plane. Consequently, it will be appreciated that the present invention allows to easily rearrange the aligned VAWTs 12₁ - 12₅ in function of the wind direction, so that the vertical longitudinal midplane of the VAWTs 12₁ - 12₅ always remains perpendicular to the wind direction, whereby the efficiency of the VAWTs 12₁ - 12₅ is always close to its maximum, independently of the wind direction.

Concerning FIG. 2, it remains to be noted that the wind turbine plant 10 as such has a plant rotation diameter D that is defined as being the minimum diameter of a right circular cylinder centred on the substantially vertical swivel axis 18 and fully enveloping all the VAWTs 12₁ - 12₅ supported on the common turbine support platform 14. In FIG. 2, this common turbine support platform 14 has a rotation diameter D that equals about 7d, wherein d is the rotation diameter (as defined hereinbefore) of a single VAWT 12₁ - 12₅.

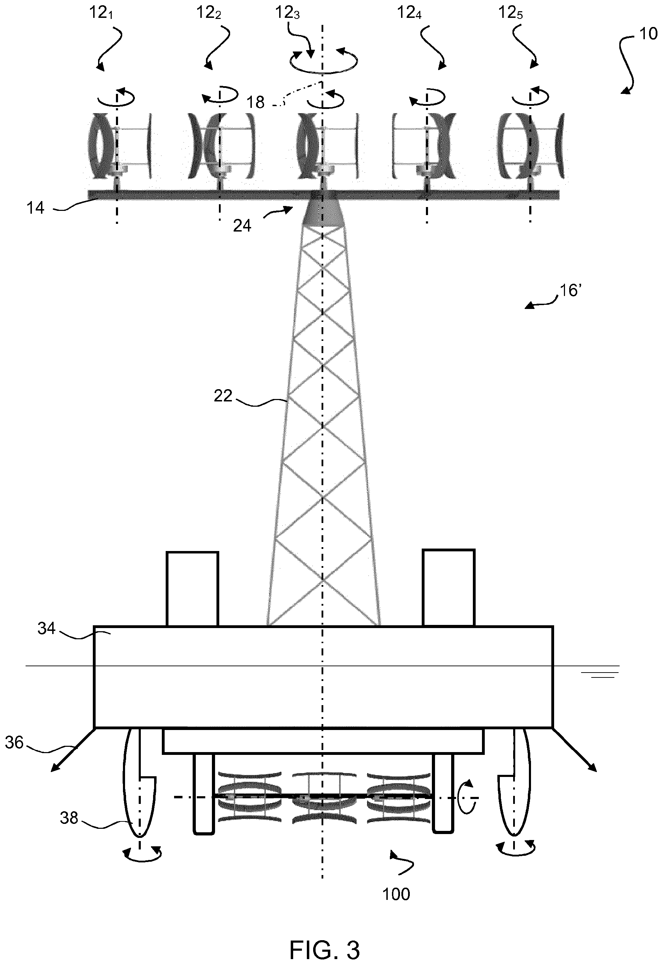

FIG. 3 shows an embodiment of a wind turbine plant 10' conceived for offshore use or for being installed in deeper rivers or in lakes. The embodiment of FIG. 3 distinguishes from the embodiment in FIG. 1 mainly in that the fixed base 20 of the support structure 16 is replaced by a floatable pontoon 34. For the description of all the other parts of the wind turbine plant 10' of FIG. 3, reference is made to FIG. 1.

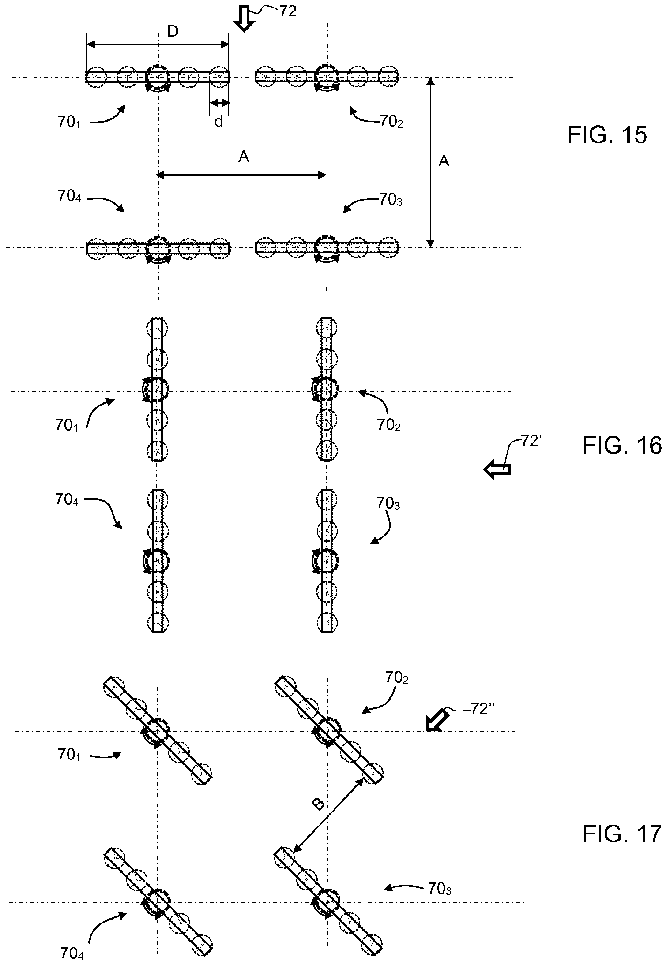

In the embodiment shown in FIG. 3, the pontoon 34 is further equipped with a water turbine 100, which is mounted under the pontoon 34 to convert the energy of a water current (e.g. a tidal current near a coast or a water current in a river) in electrical energy. A mooring equipment 36 maintains the pontoon 34 in a fixed place. If the direction of the water current is variable, the mooring equipment 36 should confer a certain rotational degree of freedom to the pontoon 34, so that the latter can rotate about a vertical axis. Motorized swivellable keels 38, which are mounted under the pontoon 34, are in this case used to adjust the angular orientation of the pontoon in the water current, thereby allowing to optimally position the water turbine 100 relative to the water current. Above water level, the swivellable common turbine support platform 14 allows to optimally position the aligned VAWTs 12₁-12₅ relative to the wind direction, independently of the positioning of the water turbine 100 in the water current. Further characteristics and embodiments of the water turbine 100 will be described further down, with reference to FIG. 15 and 16.

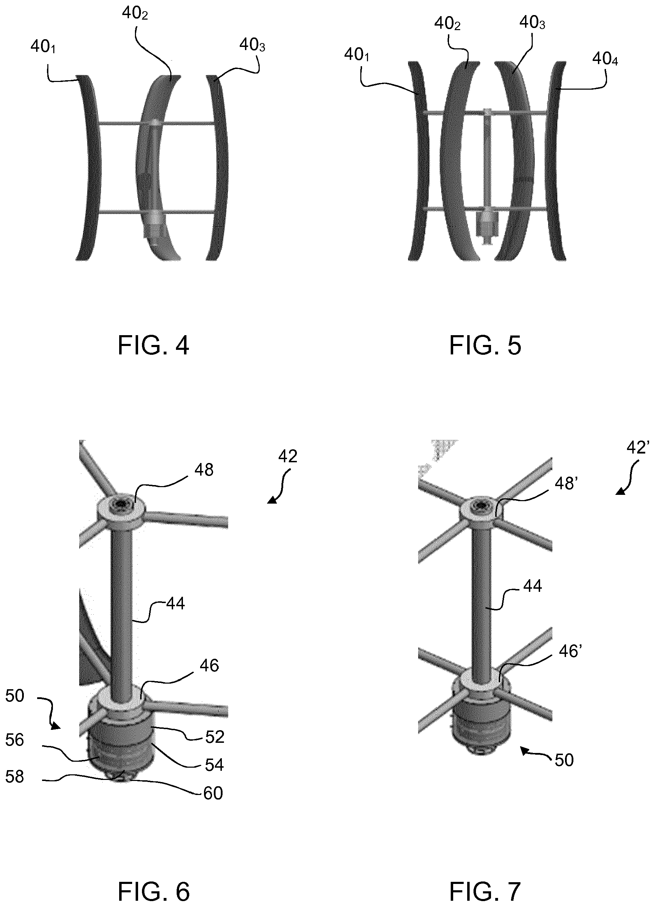

FIG. 4 shows an enlarged view of a VAWT with three profiled (i.e. wing-shaped or lift-type) turbine blades 40₁, 40₂, 40₃ equipping the wind turbine plant 10 shown in FIG. 1 or 3. The profiled turbine blades 40₁, 40₂, 40₃ are mounted on a turbine blade support structure 42, which is better seen on FIG. 6. This turbine blade support structure 42 comprises a vertical shaft 44, an assembly of three lower supporting arms 46, arranged at a lower end of the vertical shaft 44, and an assembly of three upper supporting arms 48, arranged at a lower end of the shaft 44, so that the wing-shaped turbine blades 40ᵢ are circumferentially distributed around the vertical shaft (44ᵢ). The turbine blade support structure 42 is mounted on an energy conversion module 50 including in a stacked configuration: an alternator 52 coupled to the vertical shaft 44; an electric power output module 54; a control module 56 providing control, security and communication functions; an emergency brake system 58 (preferably a magnetic brake system); and a cable outlet/inlet module 60 for electric power cables 32 and data and control cables.

FIG. 4 shows an enlarged view of a VAWT with four profiled turbine blades 40₁, 40₂, 40₃, 40₄, which are mounted on a rotatable turbine blade support structure 42', which is better seen on FIG. 7. The energy conversion module 50 is identical to that described in the previous paragraph. The turbine blade support structure 42' distinguishes over the turbine blade support structure 42 basically in that the assembly of lower supporting arms 46' and the assembly of upper supporting arms 48' each includes four instead of three supporting arms. It will be appreciated that this modular design allows to easily build a VAWT with different numbers of profiled turbine blades 40ᵢ and/or with different rotation diameters and/or with different turbine blade pitch angles and/or turbine blade heights and/or turbine blade profiles, sections and shapes. Varying for example the length of the supporting arms it is for example possible to easily change the diameter of a VAWT.

"Turbine solidity" is a parameter indicating how much of the area that the turbine blades sweep through (swept area), is occupied by the turbines blades. To change the turbine solidity of a VAWT one can for example: change its rotation diameter by changing the length of the turbine blade support arms; change its number of turbine blades; change the chord length of the turbine blades; change the pitch angle of the turbine blades. It will be noted that a VAWT with a higher turbine solidity will generally start to rotate earlier than a VAWT with a lower turbine solidity. However, a VAWT with a lower turbine solidity can generally continue working at higher wind speeds than a VAWT with a higher turbine solidity.

The present inventor has found out that putting a VAWT with a higher turbine solidity close to VAWT with a smaller turbine solidity, both VAWTs will favourably influence one another. This will be in particular the case if the following conditions are met: the direction of the wind is substantially perpendicular to the vertical longitudinal midplane of both VAWTs; the free space horizontally measured between the two neighbouring VATWs is preferably between 0.2dmax and 1dmax, more preferably between 0.3dmax and 0.7dmax, and most preferably between 0.4dmax and 0.6dmax, where dmax is the largest rotation diameter of both VAWTs; and, last but not least, both VAWTs are rotating in opposite directions. At low wind speeds, the VAWT with the higher turbine solidity will start to rotate earlier and will then assist the VAWT with the lower turbine solidity to start rotating earlier, thereby increasing the time during which the latter is operational. However, the VAWT with the lower turbine solidity will continue to work at higher wind speeds than the VAWT with the higher turbine solidity.

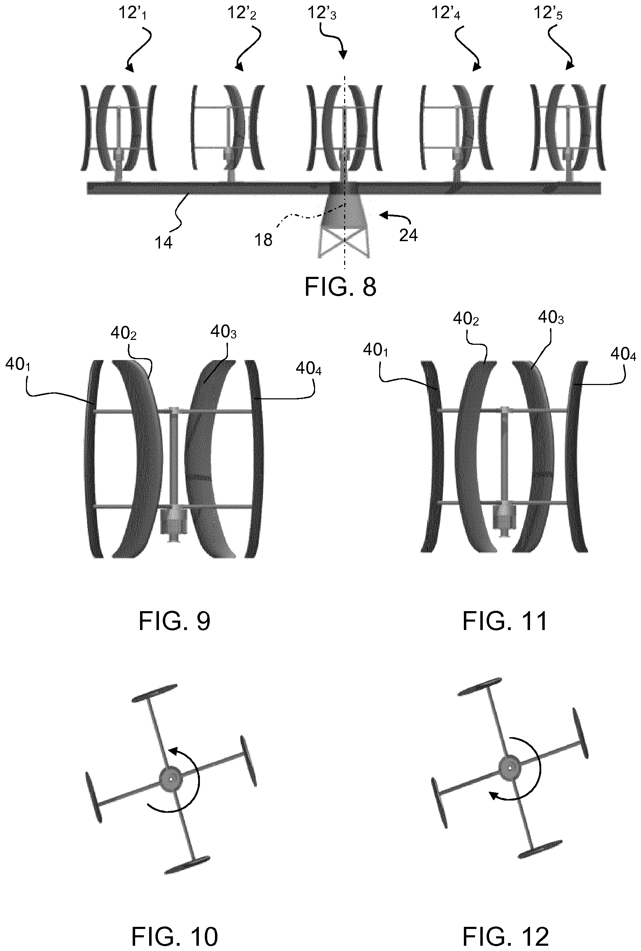

To take advantage of the afore-described and other beneficial effects, the present invention proposes to align, on a common turbine support platform 14, which is swivellable about a vertical swivel axis 18, alternatively VAWTs with a higher turbine solidity and a lower turbine solidity. Such an embodiment is e.g. shown in FIG. 8. In this embodiment, the first VAWT 12'₁, the third VAWT 12'₃ and the fifth VAWT 12'₅ are VAWTs with four turbine blades, and the second VAWT 12'₂ and the fourth VAWT 12'₄ are VAWTs with only three turbine blades. The two outermost VAWTs 12'₁ and 12'₅ and the central VAWT 12'₃ have consequently a higher turbine solidity than the VAWT 12'₂ and VAWT 12'₄ aligned between them. The first VAWT 12'₁, the third VAWT 12'₃ and the fifth VAWT 12'₅ rotate in a counter-clockwise direction, whereas the second VAWT 12'₂ and the fourth VAWT 12'₄ rotate in a clockwise direction. The free space between two neighbouring VAWTs is about 0.5dmax, wherein dmax is the rotation diameter of the VAWT with four turbine blades. Instead of or in addition to differing by their turbine blade numbers, two successive VAWTs could also differ by their diameter (e.g. by the length of the support arms), the turbine blade pitch angles, the turbine blade chords, sections and forms.

FIG. 9 to FIG. 12 illustrate on the basis of a VAWT with four profiled turbine blades 40₁, 40₂, 40₃, 40₄, how the same components can be used for building a wind turbine having a clockwise or a counter-clockwise direction of rotation. The turbine of FIG. 8 and 9 has a counter-clockwise direction of rotation. It can be easily transformed into the turbine of FIG. 10 and 11, which has a clockwise direction of rotation, by simply mounting the four profiled turbine blades 40₁, 40₂, 40₃, 40₄ upside down on the same turbine blade support structure 42.

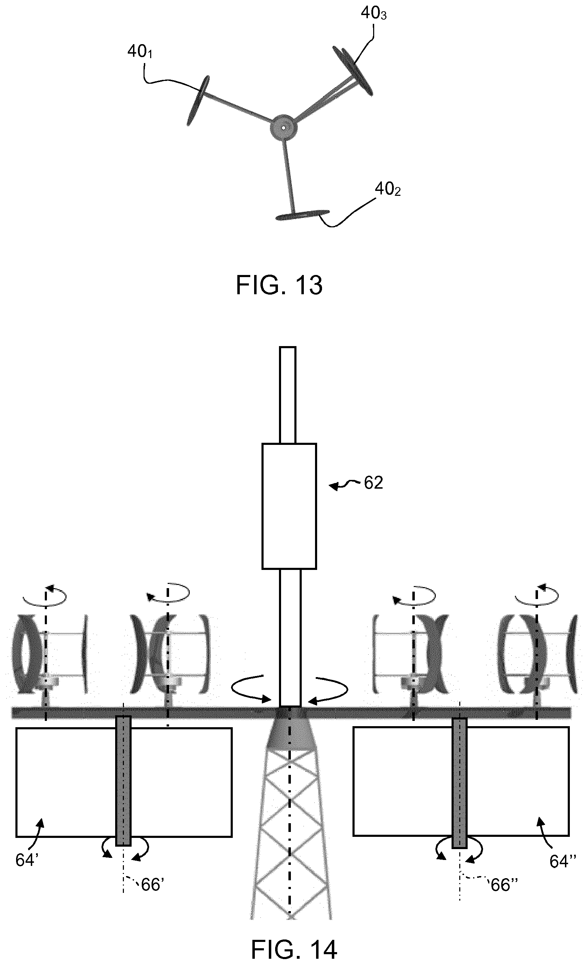

FIG. 13 illustrates on the basis of a VAWT with three profiled turbine blades 40₁, 40₂, 40₃ how the pitch of the turbine blades can be easily modified for example by slightly changing the direction of the turbine blade support arms. A similar result can be achieved by providing a bent or cuneiform spacer between the turbine blade support arm and the turbine blade.

FIG. 14 illustrates an embodiment of a wind turbine plant in which the central VAWT has been replaced by an antenna equipment 62, used for example for communication purposes. This embodiment, or any other embodiment of a wind turbine plant in accordance with the invention, optionally includes solar panels 64, 64', which are which are suspended from the common turbine support platform 14, so as to be swivellable by a separate swivel drive about substantially vertical axes 66, 66'. A control system, that can e.g. be part of the control unit 28, can then be used to orient the rotatably supported solar panels 64, 64' substantially perpendicular to the direction of the sun, this independently of the orientation of the common turbine support platform 14, i.e. of the wind direction. However, if the wind speed exceeds a certain limit, this control system orients the rotatably supported solar panel parallel to the wind speed, independently of the direction of the sun, to avoid that the solar panel is damaged by the wind. With the embodiment of FIG. 14, the VAWTs and the solar panels 62, 62' can then be used for supplying the antenna equipment 62 with energy. In this case, the electrical unit 30 further includes batteries for storing for a deferred consumption an excess of electrical energy produced with solar and wind energy. In an embodiment not including the antenna equipment 62, the solar panels 62, 62' may e.g. be used for supplying control and communication equipment of the wind turbine plant 10 or of the VAWTs 12ᵢ with electrical energy.

FIG. 15, 16 and 17 show a terrestrial wind farm with four wind turbine plants 70₁, 70₂, 70₃, 70₄, in accordance with the invention, forming a cluster with twenty VAWTs. These four wind turbine plants 70₁ - 70₄ are substantially identical in size and have their vertical swivel axes 18 located at the corners of a square represented with chain dotted lines. The side length A of this square equals about D + d, wherein D is the rotation diameter of the wind turbine plant and d is the rotation diameter of the outermost VAWT of the wind turbine plant. Normally the side length A of this square will be in the range of D + 0.5d and D + 3d, at least for terrestrial applications where the space occupied by the wind farm should be limited to a minimum. A side length A of D + 3d would for example recommended if there are only three VAWTs per wind turbine plant. If space does not matter, it is of course possible to increase the space between the wind turbine plants 70₁ - 70₄, but this will normally not result in a significant increase of efficiency. Bigger wind farms will of course have more than four wind turbine plants. Each of these wind turbine plants will then be advantageously located at a corner of a grid of squares with a side length A.

In FIG. 15, arrow 72 identifies the wind direction. The turbine support platform 14 of each of the four wind turbine plants 70₁ - 70₄ is oriented so that the vertical longitudinal midplane of its five VAWTs is perpendicular to the wind direction 72. It will be noted that the distance between two VAWTs located one behind the other in the wind direction 72 equals about the rotation diameter D of the wind turbine plant (i.e. in this case about 7d, wherein d is the rotation diameter of the VAWTs).

In FIG. 16, the new wind direction 72' makes an angle of 90° with the wind direction 72 in FIG. 15. To compensate this change in the wind direction, the turbine support platform 14 of each of the wind turbine plants 70₁ - 70₄ has been swivelled by an angle of 90° about its vertical swivel axis 18. It will be appreciated that from an aerodynamic point of view, the situation is after this swivelling operation-basically the same as in FIG. 15, i.e. all VAWTs have substantially the same efficiency as in the situation of FIG. 15. Without this swivelling operation, the orientation of the turbine support platform 14 of each of the four wind turbine plants 70₁ - 70₄ would imply that the vertical longitudinal midplane of its five VAWTs is parallel to the wind direction 72. This would mean that the efficiency of each of the wind turbine plants 70₁ - 70₄ is severely reduced in comparison with the situation of FIG. 15.

In FIG. 17, the new wind direction 72" makes an angle of 45° with the wind direction 72 in FIG. 15. To compensate this change in the wind direction, the turbine support platform 14 of each of the wind turbine plants 70₁ - 70₄ has been swivelled by an angle of 45° about its vertical swivel axis 18. It will be noted that the distance B measured in the wind direction 72" between the two most outmost VAWTs of the wind turbine plants 70₂ and 70₃ is now slightly smaller than the rotation diameter D of the wind turbine plant. However, as long as this distance B is bigger than 5d, or at least bigger than 4d, the efficiency of the VAWTs in the cluster should not decrease too much.

Furthermore, based on the foregoing explanations, the skilled person will be readily understand that:
- if the new wind direction makes an angle of 135° with the with the wind direction 72 in FIG. 15, the turbine support platform 14 of each of the wind turbine plants 70₁ - 70₄ will be swivelled by an angle of 135° about its vertical swivel axis 18;
- if the new wind direction makes an angle of 180° with the with the wind direction 72 in FIG. 15, the turbine support platform 14 of each of the wind turbine plants 70₁ - 70₄ will be swivelled by an angle of 0, i.e. it may remain unchanged°;
- if the new wind direction makes an angle of 225° with the with the wind direction 72 in FIG. 15, the turbine support platform 14 of each of the wind turbine plants 70₁ - 70₄ will be swivelled by an angle of 45°;
- if the new wind direction makes an angle of 270° with the with the wind direction 72 in FIG. 15, the turbine support platform 14 of each of the wind turbine plants 70₁ - 70₄ will be swivelled by an angle of 90°; and
- if the new wind direction makes an angle of 315° with the with the wind direction 72 in FIG. 15, the turbine support platform 14 of each of the wind turbine plants 70₁ - 70₄ will be swivelled by an angle of 135°.

In general, the control unit 28 associated with each of the each of the wind turbine plants 70₁ - 70₄ controls the swivel drive 26, so as to adjust the angular position of the common turbine support platform 14 in function of the wind direction. If the wind direction changes by an angle α < 180°, the turbine support platform 14 of the wind turbine plant 70₁ - 70₄ will be swivelled by the same angle α about its vertical swivel axis 18. If the wind direction changes by an angle α ≥180°, the turbine support platform 14 of the wind turbine plant 70₁ - 70₄ will be swivelled by the angle α - 180° about its vertical swivel axis 18. Alternatively or additionally, the control of the swivelling of the turbine support platform 14 of the wind turbine plant 70₁ - 70₄ could be carried out or optimized by a closed loop control system using as a feedback value a real-time measurement of the efficiency of the wind turbine plant 70₁ - 70₄ or a real-time measurement of one or more parameter substantially replicating said efficiency. Such a control system would have amongst others the advantage to compensate for a possible inhomogeneity in the wind direction over the diameter D of the wind turbine plant 70₁ - 70₄ and for interferences between the wind turbine plants 70₁ - 70₄.

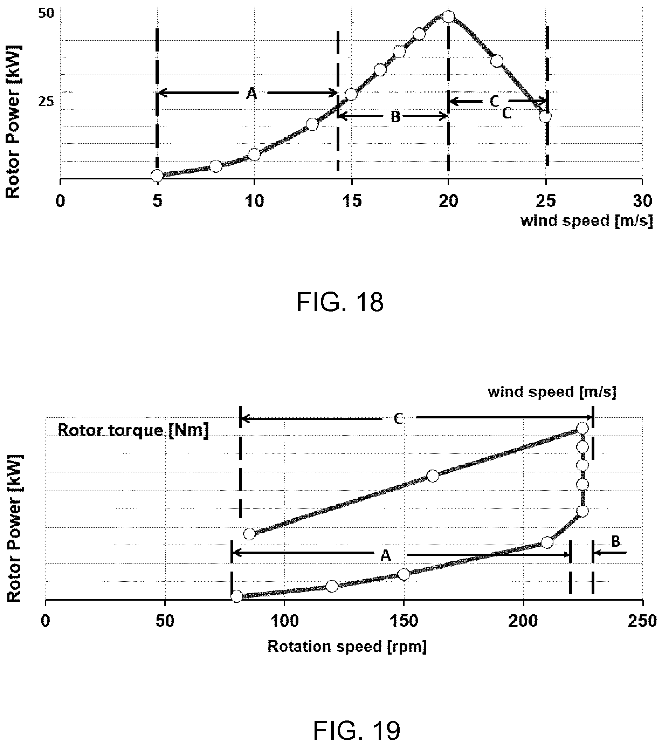

FIG. 18 is a diagram showing the rotor power of a VAWT in function of the wind speed. FIG 19 is a diagram showing the rotor power of the same VAWT in the same test in function of the rotation speed in rounds per minute (rpm). In both diagrams three areas identified with the letters A, B, C. Area A corresponds to the acceleration phase of the VAWT under an increasing wind speed, up to a point where the VAWT reaches a maximum rotation speed. Area B corresponds to a continued increase of converted power under an increasing wind speed, while the rotation speed is maintained constant at a secure maximum rotation speed and the torque at the VAWT increases. Area C corresponds to phase wherein converted power output decreases, as the rotation speed is decreases, whereas the wind speed still continues to increase up to a cut-out wind speed, where the VAWT will be shut down by its emergency braking system. Under any of the previously described embodiments, the control unit will feature individual rule based smart controllers for each individual VAWT in the cluster, which controllers are capable of organising the control of each individual VAWT according to kinetic energy input, VAWT inertia, wind-speed data and desired individual rpm/time and rpm/wind speed behaviour.

A higher level supervisory controller advantageously follows the rotation speed variation over time of each VAWT in the cluster and causes a selective increase or decrease of the rotation speed, in function of the VAWT which has the highest rotation speed level and the highest rotation speed increase over time.

Any VAWT reaching the upper limit of area A will be controlled by a controller to maintain a constant rotation speed and to increase torque up to a maximum converted power limit, i.e. the upper limit of area B. This is the rule base valid for area B. In area C, additional active or passive loading will decrease rotation speed under an increasing wind speed. When the cut-out wind speed is reached, the emergency braking system will stop any and all VAWTs, by means of their individual emergency brakes 58.

A higher level supervisory controller will also take over control of the swivel drive 26 of the turbine support platform 14, when the wind speed approaches the cut-out wind speed. This controller will then cause the swivel drive 26 to orient the turbine support platform 14 so that the vertical longitudinal midplane of its VAWTs 12ᵢ is no longer perpendicular to the wind direction. Preferably, this controller will cause the swivel drive 26 to progressively swivel the turbine support platform 14 from a position in which the wind direction is perpendicular to the vertical longitudinal midplane of its VAWTs in a position wherein the wind direction is parallel to said plane. This swivelling of the turbine support platform 14 allows to progressively reduce the efficiency of the VAWTs with increasing wind speeds, thereby reducing the part of the kinetic wind energy to be absorbed by the VAWTs for a given wind speed, thus delaying emergency braking actions of VAWTs.

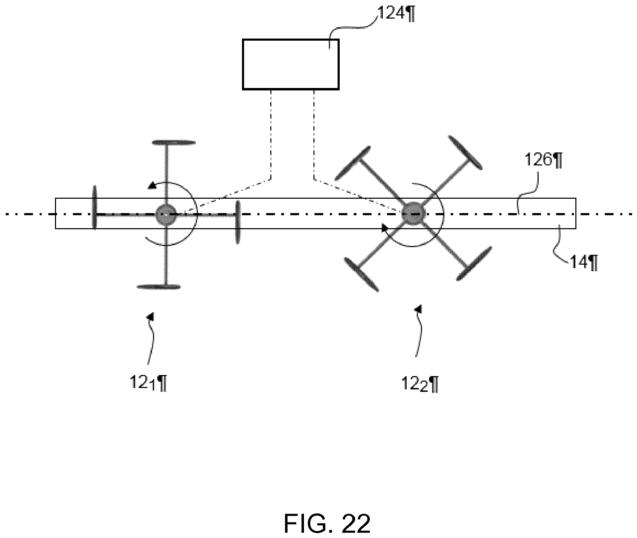

Fig. 22 illustrates a further aspect of controlling the VAWTs in the proposed wind turbine plant. This Fig. 22 shows a top view of two neighbouring VAWTs 12₁, 12₂ on a common turbine support platform (14) (the wind turbine plant will normally include additional VAWTs). A control system, schematically represented by a rectangle 124, controls the instantaneous angular position of the two neighbouring vertical axis wind turbines 12₁, 12₂ so that the turbine blades of the two vertical axis wind turbines 12₁, 12₂ cross the vertical plane 126 containing the centres of the two neighbouring vertical axis wind turbines 12₁, 12₂ separated by a non-zero time interval. In other words, the points in time at which the turbine blades of the first vertical axis wind turbines 12₁ cross the vertical plane 126 differ from the points in time at which the turbine blades of the second vertical axis wind turbines 12₂ the points in time at which their turbine blades cross the vertical plane 126. The control system 124 controls the instantaneous angular position of the two neighbouring vertical axis wind turbines 12₁, 12₂ by instantaneously increasing, respectively decreasing, power demand from at least one of the two vertical axis turbines, thereby slowing down, respectively accelerating, the respective vertical axis turbine. The control system 124 advantageously monitors total power output of both vertical axis turbines 12₁, 12₂ and controls their instantaneous angular positions so as to maximize said total power output.

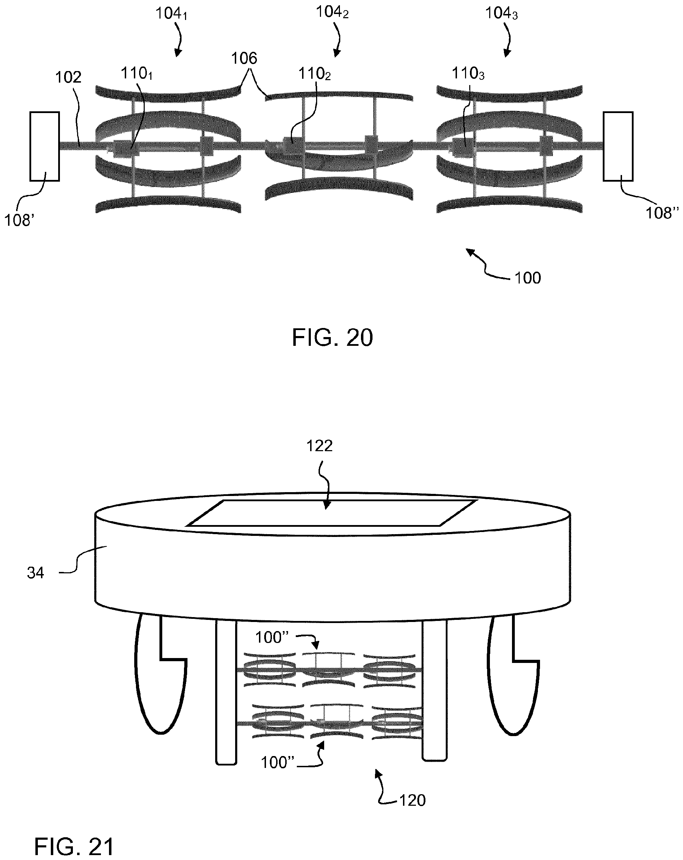

FIG. 20 shows a further embodiment of a water turbine 100 as shown in FIG. 3. This water turbine 100 has a shaft 102 supporting three rotor sections 104₁, 104₂, 104₃, so as to define a substantially horizontal turbine axis. Each of these rotor sections 104₁, 104₂, 104₃ includes wing-shaped turbine blades 106 extending axially along the substantially horizontal axis of rotation, wherein the first and third rotor sections 104₁ and 104₃ include four turbine blades 106 and the second rotor section 104₂ includes only three turbine blades 106 and has a smaller turbine solidity than the two outermost rotor sections 104₁ and 104₃ (i.e. in the area that the turbine blades sweep through (swept area), the turbines blades occupy less area in the central second rotor section 104₂, than in the outermost first and third rotor sections 104₁ and 104₃).

In a first embodiment, the three rotor sections 104₁, 104₂, 104₃ transmit their torque to the shaft 102, which is connected to a common energy conversion module housed for example in a water tight bearing box 108 or 108' at one of the ends of the shaft 102. In a second embodiment, each of the rotor sections 104₁, 104₂, 104₃ is independently rotatable about the shaft 102 and is equipped with its own energy conversion module 110₁, 110₂, 110₃. The latter generally includes an alternator, an electric power output module, a control module providing control, security and possibly communication functions, a rotor brake system and a cable outlet/inlet module for electric power cables 32 and data and control cables. These cables are advantageously guided through a central channel in the shaft 102 into the water tight bearing box 108 or 108', from where they are guided above water level in a control unit or an electrical unit as described hereinbefore.

The water turbine 100 shown in FIG. 20 can for example be mounted under a floatable pontoon (as shown in FIG. 3 and 21) or be supported by a support structure resting on sea ground or in a river bed. FIG. 21 shows an embodiment of a water turbine 120 mounted onto a floatable pontoon 34 as described hereinbefore. The water turbine 120 distinguishes over the water turbine 100 mainly in that it includes two vertically spaced water turbines 100', 100" as described above. The height of the free space vertically separating two superposed rotor sections water of the water turbines 100', 100" is preferably in the range of 0.3dmax to 2dmax, wherein dmax is the biggest rotation diameter of the axially aligned the rotor sections 104₁, 104₂, 104₃. Two superposed rotor sections always rotate in the opposite direction or, in other words, the blades of the two superposed rotor sections move in the same direction as they approach one another.

To easily access the water turbine 120 (or 100) for reparation and maintenance purposes or prevent that the water turbine 120 (or 100) is damaged in case of heavy sea or during transfer of the pontoon to its final position, the floatable pontoon 34 advantageously comprises a central opening 122 through which the water turbine 120 (or 100) can be vertically extracted.

**Reference signs list**

| | | | |
|---|---|---|---|
| 10 | wind turbine plant | 50 | energy conversion module |
| 12ᵢ | vertical axis wind turbine (VAWT) | 52 | alternator |
| 14 | common turbine support platform | 54 | electric power output module |
| 16 | support structure | 56 | control module |
| 18 | vertical swivel axis | 58 | emergency brake system |
| 19 | swivelling movement | 60 | cable outlet/inlet module |
| 20 | base | 62 | antenna equipment |
| 22 | vertical structure | 64 | solar panel |
| 24 | swivel device | 66 | vertical rotary axes of 64 |
| 26 | swivel drive | 70i | wind turbine plants |
| 28 | control unit | 72 | wind direction |
| 29 | electronic wind vane | 100 | water turbine |
| 30 | electrical unit | 102 | shaft |
| 32 | power cables | 104i | rotor sections of 100 |
| 34 | floatable pontoon | 106 | turbine blades of 104i |
| 36 | mooring equipment | 108 | water tight bearing box |
| 38 | keels | 110i | energy conversion module |
| 40ᵢ | turbine blade | 120 | water turbine |
| 42 | support structure | 122 | central opening in 34 |
| 44 | vertical shaft | 124 | control system |
| 46 | lower supporting arms | 126 | plane |
| 48 | upper supporting arms | | |

## Claims

1. A wind turbine plant comprising:
at least two vertical axis wind turbines (12ᵢ), each of said vertical axis wind turbines (12ᵢ) including a substantially vertical shaft (44ᵢ) and at least three wing-shaped turbine blades of the lift-type circumferentially distributed around the vertical shaft (44ᵢ);
a common turbine support platform (14) supporting the at least two vertical axis wind turbines (12ᵢ) horizontally spaced apart from one another, wherein:
- the wing-shaped turbine blades of two neighbouring vertical axis wind turbines (12ᵢ) are exposed to the wind in the space between the vertical shafts (44ᵢ) of the two vertical axis wind turbines (12ᵢ);
- the rotation diameters of the two neighbouring vertical axis wind turbines (12) are separated by a horizontal distance s that is between 0.2*dmax and 1.5*dmax, where dmax is the largest rotation diameter of the two neighbouring vertical axis wind turbines (12); and
- the two neighbouring vertical axis wind turbines (12) are designed for having opposite directions of rotation; and
a swivel device (24) supporting the common turbine support platform (14), so that the latter is swivelable about a substantially vertical swivel axis (18).

2. The wind turbine plant as claimed in claim 1, wherein:
the axes of rotation of said at least two vertical axis wind turbines (12) are horizontally spaced apart from said substantially vertical swivel axis (18).

3. The wind turbine plant as claimed in claim 1 or 2, further including:
a vertical axis wind turbine (12₃) having a vertical axis of rotation that is substantially aligned with said substantially vertical swivel axis (18).

4. The wind turbine plant as claimed in any one of the preceding claims, including at least three, preferably at least four and more preferably at least five vertical axis wind turbines (12ᵢ), which are aligned on said common turbine support platform (14), so as to form a linear arrangement of vertical axis wind turbines (12i) horizontally spaced from one another.

5. The wind turbine plant as claimed in any one of the preceding claims, wherein:
each of said vertical axis wind turbines (12ᵢ) includes n wing-shaped turbine blades(40i), wherein n is equal to 3, 4 or 5.

6. The wind turbine plant as claimed in any one of the preceding claims, wherein:
the horizontal distance s measured between the rotation diameters of two neighbouring vertical axis wind turbines (12) on the common turbine support platform (14) is between 0.3*dmax and 0.7*dmax, and preferably between 0.4*dmax and 0.6*dmax, where dmax is the largest rotation diameter of both wind turbines (12).

7. The wind turbine plant as claimed in any one of the preceding claims, wherein said two vertical axis wind turbines (12) distinguish from each other by having a different turbine solidity, wherein the turbine solidity is defined as the ratio of the area occupied by the turbines (12) blades and the area that the turbine blades sweep through, wherein the difference between both turbine solidities is preferably greater than 5%, more preferably greater than 10% of the smallest turbine solidity.

8. The wind turbine plant as claimed in any one of the preceding claims, wherein the two neighbouring vertical axis wind turbines (12) distinguish from each other by at least one of the following features:
their number of turbine blades (40ᵢ);
their diameter (d);
the shape of at least one of their turbine blades (40ᵢ);
the section profile of at least one of their turbine blades (40ᵢ);
the chord length of at least one of their turbine blades (40ᵢ);
the pitch angle of at least one of their turbine blades (40ᵢ);
the angular spacing of their turbine blades; and
in operation, by the points in time at which their turbine blades cross the vertical plane containing the centres of the two neighbouring vertical axis wind turbines (12ᵢ).

9. The wind turbine plant as claimed in any one of the preceding claims, wherein said swivel device (24) is supported at a certain height above ground or above water level by a vertical support structure.

10. The wind turbine plant as claimed in any one of the preceding claims, further comprising at least one solar panel (64, 64') rotatably supported by said common turbine support platform (14).

11. The wind turbine plant as claimed in any one of the preceding claims, further comprising a control system:
controlling the instantaneous angular position of two neighbouring vertical axis wind turbines (12ᵢ) so that the turbine blades of the two vertical axis wind turbines (12ᵢ) cross the vertical plane containing the centres of the two neighbouring vertical axis wind turbines (12) separated by a non-zero time interval.

12. The wind turbine plant as claimed in claim 11, wherein the control system controls the instantaneous angular position of the two neighbouring vertical axis wind turbines (12ᵢ) by instantaneously increasing, respectively decreasing, power demand from at least one of the two vertical axis turbines, thereby slowing down, respectively accelerating, the respective vertical axis turbine.

13. The wind turbine plant as claimed in claim 11 or 12, wherein the control system monitors total power output of both vertical axis turbines and controls their instantaneous angular positions so as to maximize said total power output.

14. The wind turbine plant as claimed in any one of the preceding claims, further comprising a control system:
controlling, at wind speeds below a certain limit wind speed, said swivel device (24) so that the vertical longitudinal midplane of the vertical axis wind turbines (12) aligned on the common turbine support platform (14) remains substantially perpendicular to the wind direction; and
controlling, at wind speeds above said limit wind speed, said swivel device (24) so that the angle between said vertical longitudinal midplane and the wind speed progressively decreases from 90° to 0°, when the wind speed increases above said limit wind speed.

15. A wind turbine farm comprising at least two wind turbine plants as claimed in any one of the preceding claims, wherein the horizontal distance (A) between the vertical swivel axes of said two wind turbine plants is within the range of (D1+D2)/2 + 0.5d and (D1+D2)/2 + 5d, and preferably in the range of (D1+D2)/2 + 0.5d and (D1+D2)/2 + 3d, wherein D1 and D2 are the rotation diameters of the two wind turbine plants, and d is the biggest rotation diameter of the outermost vertical axis wind turbines (12) of said two wind turbine plants.

## Patentansprüche

1. Windturbinenanlage, die Folgendes umfasst:
mindestens zwei Windturbinen (12ᵢ) mit vertikaler Achse, wobei jede der Windturbinen (12ᵢ) mit vertikaler Achse eine im Wesentlichen vertikale Welle (44ᵢ) und mindestens drei flügelförmige Turbinenblätter des Auftriebstyps, die um die vertikale Welle (44ᵢ) umlaufend verteilt sind, beinhaltet;
eine gemeinsame Turbinenstützplattform (44), welche die mindestens zwei Windturbinen (12ᵢ) mit vertikaler Achse, die horizontal zueinander beabstandet sind, stützt, wobei:
- die flügelförmigen Turbinenblätter der beiden benachbarten Windturbinen (12ᵢ) mit vertikaler Achse in dem Raum zwischen den vertikalen Wellen (44ᵢ) der zwei Windturbinen (12ᵢ) mit vertikaler Achse dem Wind ausgesetzt sind;
- die Rotationsdurchmesser der zwei benachbarten Windturbinen (12) mit vertikaler Achse durch einen horizontalen Abstand s getrennt sind, der zwischen 0,2*dmax und 1,5*dmax liegt, wobei dmax der größte Rotationsdurchmesser der zwei benachbarten Windturbinen (12) mit vertikaler Achse ist; und
- die zwei benachbarten Windturbinen (12) mit vertikaler Achse dazu ausgelegt sind, entgegengesetzte Drehrichtungen zu haben; und
eine Schwenkvorrichtung (24), welche die gemeinsame Turbinenstützplattform (14) stützt, sodass die Letztere um eine im Wesentlichen vertikale Schwenkachse (18) schwenkbar ist.

2. Windturbinenanlage nach Anspruch 1, wobei:
die Drehachsen der mindestens zwei Windturbinen (12) mit vertikaler Achse zu der im Wesentlichen vertikalen Schwenkachse (18) horizontal beabstandet sind.

3. Windturbinenanlage nach Anspruch 1 oder 2, die ferner Folgendes umfasst:
eine Windturbine (12₃) mit vertikaler Achse, die eine vertikale Drehachse aufweist, die im Wesentlichen auf die im Wesentlichen vertikale Schwenkachse (18) ausgerichtet ist.

4. Windturbinenanlage nach einem der vorangehenden Ansprüche, die mindestens drei, vorzugsweise mindestens vier und stärker zu bevorzugen mindestens fünf Windturbinen (12ᵢ) mit vertikaler Achse beinhaltet, die auf der gemeinsamen Turbinenstützplattform (14) ausgerichtet sind, sodass eine lineare Anordnung von Windturbinen (12ᵢ) mit vertikaler Achse gebildet wird, die horizontal zueinander beabstandet sind.

5. Windturbinenanlage nach einem der vorangehenden Ansprüche, wobei:
jede der Windturbinen (12ᵢ) mit vertikaler Achse n flügelförmige Turbinenblätter (40ᵢ) beinhaltet, wobei n gleich 3, 4 oder 5 ist.

6. Windturbinenanlage nach einem der vorangehenden Ansprüche, wobei:
der horizontale Abstand s zwischen den Drehdurchmessern zwei benachbarter Windturbinen (12) mit vertikaler Achse, gemessen zwischen den Drehdurchmessern von zwei benachbarten Windturbinen (12) mit vertikaler Achse auf der gemeinsamen Turbinenstützplattform (14) zwischen 0,3*dmax und 0,7*dmax liegt, vorzugsweise zwischen 0,4*dmax und 0,6*dmax, wobei dmax der größte Drehdurchmesser beider Windturbinen (12) ist.

7. Windturbinenanlage nach einem der vorangehenden Ansprüche, wobei sich die zwei Windturbinen (12) mit vertikaler Achse dadurch voneinander unterscheiden, dass sie eine unterschiedliche Turbinenfestigkeit aufweisen, wobei die Turbinenfestigkeit definiert ist als das Verhältnis der von den Blättern der Turbinen (12) belegten Fläche und der Fläche, welche die Turbinenblätter überstreichen, wobei die Differenz zwischen beiden Turbinenfestigkeiten vorzugsweise größer als 5 %, stärker zu bevorzugen größer als 10 % der kleinsten Turbinenfestigkeit ist.

8. Windturbinenanlage nach einem der vorangehenden Ansprüche, wobei sich die zwei benachbarten Windturbinen (12) mit vertikaler Achse voneinander durch mindestens eines der folgenden Merkmale unterscheiden:
ihre Anzahl von Turbinenblättern (40ᵢ);
ihren Durchmesser (d);
die Form mindestens eines ihrer Turbinenblätter (40ᵢ);
das Querschnittsprofil mindestens eines ihrer Turbinenblätter (40ᵢ);
die Blatttiefe mindestens eines ihrer Turbinenblätter (40ᵢ);
den Steigungswinkel mindestens eines ihrer Turbinenblätter (40ᵢ);
den Winkelabstand ihrer Turbinenblätter; und
im Betrieb, durch die Zeitpunkte, zu denen ihre Turbinenblätter die vertikale Ebene, welche die Zentren der beiden Windturbinen (12ᵢ) mit vertikaler Achse enthält, kreuzen.

9. Windturbinenanlage nach einem der vorangehenden Ansprüche, wobei die Schwenkvorrichtung (24) in einer bestimmten Höhe über dem Boden oder über dem Wasserstand durch eine vertikale Stützstruktur gestützt wird.

10. Windturbinenanlage nach einem der vorangehenden Ansprüche, die ferner mindestens eine Solarzellenplatte (64, 64') umfasst, die drehbar von der gemeinsamen Turbinenstützplattform (14) gestützt wird.

11. Windturbinenanlage nach einem der vorangehenden Ansprüche, die ferner ein Steuerungssystem umfasst:
das die Augenblickswinkelposition der beiden benachbarten Windturbinen (12ᵢ) mit vertikaler Achse steuert, sodass die Turbinenblätter der beiden Windturbinen (12ᵢ) mit vertikaler Achse die vertikale Ebene kreuzen, welche die Zentren der beiden benachbarten Windturbinen (12) mit vertikaler Achse enthält, getrennt durch ein von null verschiedenes Zeitintervall.

12. Windturbinenanlage nach Anspruch 11, wobei das Steuersystem die Augenblickswinkelposition der beiden benachbarten Windturbinen (12ᵢ) mit vertikaler Achse steuert, indem es die Leistungsanforderung von mindestens einer der zwei Turbinen mit vertikaler Achse sofort erhöht bzw. verringert, wodurch die entsprechende Turbine mit vertikaler Achse verlangsamt bzw. beschleunigt wird.

13. Windturbinenanlage nach Anspruch 11 oder 12, wobei das Steuersystem die Gesamtleistungsabgabe der beiden Turbinen mit vertikaler Achse überwacht und ihre Augenblickswinkelpositionen steuert, um die Gesamtleistungsabgabe zu maximieren.

14. Windturbinenanlage nach einem der vorangehenden Ansprüche, die ferner ein Steuerungssystem umfasst:
das bei Windgeschwindigkeiten unterhalb einer bestimmten Grenzwindgeschwindigkeit die Schwenkvorrichtung (24) so steuert, dass die vertikale Längsmittelebene der Windturbinen (12) mit vertikaler Achse, welche auf die gemeinsame Turbinenstützplattform (14) ausgerichtet ist, im Wesentlichen senkrecht zu der Windrichtung bleibt; und
das bei Windgeschwindigkeiten oberhalb der Grenzwindgeschwindigkeit die Schwenkvorrichtung (24) so steuert, dass sich der Winkel zwischen der vertikalen Längsmittelebene und der Windgeschwindigkeit fortschreitend von 90° auf 0° verringert, wenn sich die Windgeschwindigkeit über die Grenzwindgeschwindigkeit erhöht.

15. Windturbinenpark, der mindestens zwei Windturbinenanlagen nach einem der vorangehenden Ansprüche umfasst, wobei der horizontale Abstand (A) zwischen den vertikalen Schwenkachsen der zwei Windturbinenanlagen innerhalb des Bereichs von (D1+D2)/2 + 0,5d und (D1+D2)/2 + 5d liegt, vorzugsweise innerhalb des Bereichs von (D1+D2)/2 + 0,5d und (D1+D2)/2 + 3d, wobei D1 und D2 die Drehdurchmesser der zwei Windturbinenanlagen sind und d der größte Drehdurchmesser der äußersten Windturbinen (12) mit vertikaler Achse der beiden Windturbinenanlagen ist.

## Revendications

1. Installation d'éoliennes, comprenant:
au moins deux éoliennes à axe vertical (12ᵢ), chacune desdites éoliennes à axe vertical (12ᵢ) comprenant un arbre sensiblement vertical (44ᵢ) et au moins trois aubes d'éolienne en forme d'aile distribuées de façon circonférentielle autour de l'arbre vertical (44ᵢ);
une plate-forme de support d'éoliennes commune (14) qui supporte lesdites au moins deux éoliennes à axe vertical (12ᵢ) espacées horizontalement l'une de l'autre, dans laquelle:
les aubes d'éolienne en forme d'aile de deux éoliennes à axe vertical voisines (12ᵢ) sont exposées au vent dans l'espace entre les arbres verticaux (44ᵢ) des deux éoliennes à axe vertical (12ᵢ);
les diamètres de rotation des deux éoliennes à axe vertical voisines (12) sont séparés par une distance horizontale s qui est comprise entre 0,2*dmax et 1,5*dmax, où dmax est le plus grand diamètre de rotation des deux éoliennes à axe vertical voisines (12); et
les deux éoliennes à axe vertical voisines (12) sont conçues de manière à présenter des sens de rotation opposés; et
un dispositif de pivotement (24) qui supporte la plate-forme de support d'éoliennes commune (14), de telle sorte que cette dernière puisse pivoter autour d'un axe de pivotement sensiblement vertical (18).

2. Installation d'éoliennes selon la revendication 1, dans laquelle les axes de rotation desdites au moins deux éoliennes à axe vertical (12) sont espacés horizontalement dudit axe de pivotement sensiblement vertical (18).

3. Installation d'éoliennes selon la revendication 1 ou 2, comprenant en outre une éolienne à axe vertical (12₃) qui présente un axe vertical de rotation sensiblement aligné avec ledit axe de pivotement sensiblement vertical (18).

4. Installation d'éoliennes selon l'une quelconque des revendications précédentes, comprenant au moins trois, de préférence au moins quatre et mieux encore au moins cinq éoliennes à axe vertical (12ᵢ), qui sont alignées sur ladite plate-forme de support d'éoliennes commune (14), de manière à former un agencement linéaire d'éoliennes à axe vertical (12ᵢ) espacées horizontalement le unes des autres.

5. Installation d'éoliennes selon l'une quelconque des revendications précédentes, dans laquelle chacune desdites éoliennes à axe vertical (12ᵢ) comprend n aubes d'éolienne en forme d'aile (40ᵢ), dans laquelle n est égal à 3, 4 ou 5.

6. Installation d'éoliennes selon l'une quelconque des revendications précédentes, dans laquelle la distance horizontale s mesurée entre les diamètres de rotation de deux éoliennes à axe vertical voisines (12) sur la plate-forme de support d'éoliennes commune (14) est comprise entre 0,3*dmax et 0,7*dmax, et de préférence entre 0,4*dmax et 0,6*dmax, où dmax est le plus grand diamètre de rotation des deux éoliennes (12) .

7. Installation d'éoliennes selon l'une quelconque des revendications précédentes, dans laquelle lesdites deux éoliennes à axe vertical (12) se distinguent l'une de l'autre en ce qu'elles présentent une résistance d'éolienne différente, dans laquelle la résistance d'éolienne est définie comme étant le rapport entre la surface occupée par les aubes d'éolienne (12) et la surface qui est balayée par les aubes d'éolienne, dans laquelle la différence entre les deux résistances d'éolienne est de préférence supérieure à 5 %, mieux encore supérieure à 10 % de la plus petite résistance d'éolienne.

8. Installation d'éoliennes selon l'une quelconque des revendications précédentes, dans laquelle les deux éoliennes à axe vertical voisines (12) se distinguent l'une de l'autre par au moins une des caractéristiques suivantes:
leur nombre d'aubes d'éolienne (40ᵢ);
leur diamètre (d);
la forme d'au moins une de leurs aubes d'éolienne (40ᵢ);
le profil de section d'au moins une de leurs aubes d'éolienne (40ᵢ);
la longueur de la corde d'au moins une de leurs aubes d'éolienne (40ᵢ);
l'angle de pas d'au moins une de leurs aubes d'éolienne (40ᵢ); ;
l'espacement angulaire de leurs aubes d'éolienne; et
lors du fonctionnement, par les points dans le temps auxquels leurs aubes d'éolienne croisent le plan vertical qui contient les centres des deux éoliennes à axe vertical voisines (12ᵢ).

9. Installation d'éoliennes selon l'une quelconque des revendications précédentes, dans laquelle ledit dispositif de pivotement (24) est supporté à une certaine hauteur au-dessus du sol ou au-dessus du niveau de l'eau par une structure de support verticale.

10. Installation d'éoliennes selon l'une quelconque des revendications précédentes, comprenant en outre au moins un panneau solaire (64, 64') supporté de façon rotative par ladite plate-forme de support d'éoliennes commune (14).

11. Installation d'éoliennes selon l'une quelconque des revendications précédentes, comprenant en outre un système de commande qui commande la position angulaire instantanée de deux éoliennes à axe vertical voisines (12ᵢ) de telle sorte que les aubes d'éolienne des deux éoliennes à axe vertical (12ᵢ) croisent le plan vertical contenant les centres des deux éoliennes à axe vertical voisines (12) séparées par un intervalle de temps non nul.

12. Installation d'éoliennes selon la revendication 11, dans laquelle le système de commande commande la position angulaire instantanée des deux éoliennes à axe vertical voisines (12ᵢ) en augmentant, respectivement en diminuant, instantanément la demande de puissance à partir d'au moins une des deux éoliennes à axe vertical, ralentissant, respectivement accélérant, ainsi l'éolienne à axe vertical respective.

13. Installation d'éoliennes selon la revendication 11 ou 12, dans laquelle le système de commande surveille la production de puissance totale des deux éoliennes à axe vertical et commande leurs positions angulaires instantanées de manière à maximiser ladite production de puissance totale.

14. Installation d'éoliennes selon l'une quelconque des revendications précédentes, comprenant en outre un système de commande:
qui commande, à des vitesses du vent inférieures à une certaine vitesse de vent limite, ledit dispositif de pivotement (24) de telle sorte que le plan médian longitudinal vertical des éoliennes à axe vertical (12) alignées sur la plate-forme de support d'éoliennes commune (14) reste sensiblement perpendiculaire à la direction du vent; et
commander, à des vitesses du vent supérieures à ladite vitesse de vent limite, ledit dispositif de pivotement (24) de telle sorte que l'angle entre ledit plan médian longitudinal vertical et la vitesse du vent diminue progressivement de 90° à 0°, lorsque la vitesse du vent augmente au-dessus de ladite vitesse de vent limite.

15. Parc d'éoliennes comprenant au moins deux installations d'éoliennes selon l'une quelconque des revendications précédentes, dans lequel la distance horizontale (A) entre les axes de pivotement verticaux desdites deux installations d'éoliennes est comprise à l'intérieur de la gamme de (D1+D2)/2 + 0,5d et (D1+D2)/2 + 5d, et de préférence dans la gamme de (D1+D2)/2 + 0,5d et (D1+D2)/2 + 3d, dans laquelle D1 et D2 sont les diamètres de rotation des deux installations d'éoliennes, et d est le plus grand diamètre de rotation des éoliennes à axe vertical les plus extérieures (12) desdites deux installations d'éoliennes.
